# EUROPÄISCHE PATENTSCHRIFT

(11) **EP 4 122 066 B1**
(45) Veröffentlichungstag und Bekanntmachung des Hinweises auf die Patenterteilung: **03.04.2024**
(21) Anmeldenummer: 21703902.3
(22) Anmeldetag: 05.02.2021
(51) Int. Cl.: H02G 9/02, H02G 9/06, H02G 3/03

(54) **SYSTEM ZUR TEMPERATURREGULIERUNG VON KABELN**
SYSTEM FOR REGULATING THE TEMPERATURE OF CABLES
SYSTÈME PERMETTANT DE RÉGULER LA TEMPÉRATURE DE CÂBLES

(30) Priorität: 17.03.2020 DE 102020107254
(43) Veröffentlichungstag der Anmeldung: 25.01.2023
(73) Patentinhaber: RWE Offshore Wind GmbH, 45141 Essen (DE)
(72) Erfinder: OBERMEYER, Sebastian, 21147 Hamburg (DE); DOMINGUEZ EBITSCH, Stefan, 22307 Hamburg (DE); SCHILLER, Christian, 22299 Hamburg (DE)
(74) Vertreter: Cohausz & Florack
(86) Internationale Anmeldenummer: PCT/EP2021/052811
(87) Internationale Veröffentlichungsnummer: WO 2021/185511

(56) Entgegenhaltungen:
- WO-A1-2019/203650
- DE-A1-102008 009 453
- DE-B3-102013 022 347
- JP-A- H0 458 712
- JP-A- 2018 022 563

## Beschreibung

### Gebiet

Die Erfindung betrifft ein System zur Temperaturregulierung von Kabeln, insbesondere für Offshore Windenergieanlagen und/oder Offshore Windparks.

### Hintergrund

Offshore Windenergieanlagen und/oder Offshore Windparks werden üblicherweise über ein oder mehrere Kabel, sogenannte Exportkabel mit dem Festland verbunden bzw. angebunden. Einer der kritischsten Punkte bei der Route von einer Offshore Windenergieanlage und/oder einem Offshore Windpark bis zur Übergabestation (z. B. Umspannstation oder Trafo) an Land stellt der Übergang von einem Gewässer (z. B. Meer) zum Land dar. Das bzw. die Kabel werden hier thermisch hoch belastet. Oft ist dieser recht kurze Bereich (etwa mehrere 100 m Länge) die thermische und strombelastbarkeitstechnische Engstelle für ein Exportkabel, das insgesamt mehrere 10 km lang sein kann. Um die Wärme des Exportkabels besser abzuführen wird oft eine Art Betongemisch verwendet, das das Kabel umhüllt. Dies birgt jedoch viele Unsicherheiten, z. B. ob das Kabel wirklich vollständig ummantelt ist. Außerdem ist es schwer bis unmöglich, das der Betonhersteller oder der Kabelhersteller die technische Verantwortung für dieses Design übernimmt, z. B. im Fehlerfall. Patentdokument JP2018022563A offenbart ein Kabel mit einem Unterwasserabschnitt und einem Landabschnitt umfassend eine Vielzahl von Stromkabelkernen und ein hohles Rohr, das Wasser zum Kühlen der Stromkabelkerne zuführt.

### Allgemeine Beschreibung einiger beispielhafter Ausführungsformen

Es wäre wünschenswert, eine Lösung bereitstellen zu können, um die vorgenannten Probleme zu minimieren bzw. vermeiden zu können, und insbesondere die thermisch hohe Belastung am Übergang von einem Gewässer zum Land derartiger Kabel verbessern zu können.

Vor dem Hintergrund des dargestellten Standes der Technik ist es somit die gegenständliche Aufgabe, die beschriebenen Probleme zumindest teilweise zu verringern oder zu vermeiden, das heißt insbesondere eine Möglichkeit bereitzustellen, um die thermisch hohe Belastung am Übergang von einem Gewässer zum Land derartiger Kabel verbessern zu können.

Diese Aufgabe wird gegenständlich durch ein System nach einem ersten Aspekt mit den Merkmalen des Anspruchs 1 gelöst. Die gegenständliche Aufgabe wird ferner durch eine Verwendung nach einem zweiten Aspekt gelöst, wobei die Verwendung ein gegenständliches System nach dem ersten Aspekt zum Anschluss zumindest einer Offshore-Windenergieanlage beansprucht.

Im Folgenden werden einige beispielhafte Ausführungsformen nach allen Aspekten detaillierter beschrieben:
Mittels des Kabels ist insbesondere ein Offshore-Bauwerk angebunden. Ein Offshore-Bauwerk ist beispielsweise eine Offshore (z. B. im Meer) installierte Windenergieanlage, und/oder ein Offshore installierter Windpark. Ein derartiger Windpark umfasst beispielsweise mehrere Windenergieanlagen.

Das Kabel ist insbesondere ein sogenanntes Exportkabel. Mittels eines derartigen Kabels bzw. Exportkabels wird beispielsweise die gesammelte erzeugte Energie einer Windenergieanlage oder eines Windparks, der Offshore installiert ist, zur Übergabestation (z. B. Umspannwerk) geleitet. Ein derartiges Kabel umfasst beispielsweise einen Aluminiumkern. Ein derartiges Kabel kann mehrere km lang sein, z. B. 50, 100, 150 km, oder mehr. Ein derartiges Kabel ist beispielsweise auf eine maximale Übertragungsleistung von 75 % der Gesamtleistung der mit dem Kabel angebundenen Windenergieanlage oder Windpark ausgelegt. Dies ermöglicht es beispielsweise auch Reserven oder bei technischen Defekten Reserven in einem oder mehreren weiteren derartiger Kabel zu nutzen. Das Kabel ist insbesondere ein Hochspannungsgleichstromübertragungskabel (HGÜ-Kabel) zum Transport von seitens einer Energieerzeugungsanlage (z. B. Windenergieanlage) erzeugter elektrischer Energie zu einem Verbraucher.

Dabei liegt dem vorliegenden Gegenstand die Erkenntnis zugrunde, dass um einen sogenannten Landfall, also den Übergang eines Kabels von einem Gewässer (das Meer) zum Land weniger kritisch auszulegen, Wasser des Gewässers gezielt vom Gewässer an dem Kabel zu dessen Temperaturregulierung vorbeigeführt, aufgefangen und optional kontrolliert wieder zurückgeführt werden kann. Derart ist das System nach dem ersten Aspekt folglich zur Temperaturregulierung eines zumindest teilweise von einem Gewässer (das Meer)zum Land verlegten Kabels einsetzbar. Das Kabel ist beispielsweise ein Standard-Seekabel, das derart konstruiert ist, dass das Kabel an seiner äußeren Ummantelung dauerhaft mit Wasser in Kontakt sein kann, ohne dass dessen Funktion beeinträchtigt wird.

Das Gewässer ist das Meer.

Das System umfasst Mittel zum landseitigen Sammeln von Wasser, so dass Wasser in diesen Mitteln gesammelt und aus diesen Mitteln ausgebbar ist. Dies ist ein Wassersammel- oder Auffangbecken, das sich auf dem Land bzw. auf der Landseite befindet. Meerwasser fließt zur Temperaturregulierung des Kabels, insbesondere zu dessen Kühlung an der äußeren Oberfläche, beispielsweise einer Ummantelung des Kabels vorbei. Das Wasser fließt zum einen vom Gewässer aus in die Mittel zum landseitigen Sammeln von Wasser, also in ein entsprechendes Wassersammelbecken. Zum anderen kann das in den Mitteln (z. B. Wassersammelbecken) zum landseitigen Sammeln von Wasser befindliche Wasser (Meerwasser) (zurück) das Kabel z. B. kühlend in das Gewässer fließen.

Das System umfasst ferner Mittel zum Steuern einer Menge von Wasser, so dass eine Menge von Wasser, die aus den Mitteln zum landseitigen Sammeln von Wasser ausströmt oder in diese hineinfließt, steuerbar ist. Beispielsweise handelt es sich bei den Mitteln zum Steuern einer Menge von Wasser um eine Mengenregulierung desjenigen Wassers, dass vom Gewässer in die Mittel zum landseitigen Sammeln von Wasser, und optional zurück von den Mitteln zum landseitigen Sammeln von Wasser in das Gewässer fließt bzw. strömt.

Das System umfasst ferner Mittel zum Kühlen eines Kabels, welche das Kabel zumindest in einem Abschnitt von den Mitteln zum landseitigen Sammeln von Wasser bis in das Gewässer hinein hüllenartig umschließen, wobei zwischen dem Kabel und den Mitteln zum Kühlen des Kabels ein Hohlraum ausgebildet ist, durch den das Wasser strömt.

Unter dem hüllenartigen Umschließen des Kabels wird vorliegend insbesondere verstanden, dass das Kabel innerhalb eines Rohrs angeordnet ist. Das Kabel liegt dabei beispielsweise frei in dem Rohr. Das Kabel ist beispielsweise nicht innerhalb des Rohrs fixiert.

Für den Fall, dass es sich bei den Mitteln zum Kühlen des Kabels um ein Rohr handelt bzw. diese ein Rohr umfassen, kann das Wasser in einem zwischen der inneren Wandung des Rohrs und einer äußeren Fläche (z. B. Ummantelung) des Kabels ausgebildeten Zwischenraum vom Gewässer in die Mittel zum landseitigen Sammeln von Wasser, und optional zurück in das Gewässer fließen bzw. strömen.

Derart ist es möglich, die generelle Problematik, die bei der Verbindung beispielsweise eines Offshore Windparks zu einer am Land installierten Übergabestation (z. B. Umspannanlage, um nur ein nicht-limitierendes Beispiel zu nennen), entgegenzuwirken, so dass ein mitunter am Übergang vom Gewässer zum Land auftretender thermischer Engpass wirksam behoben werden kann. Das Kabel ist nur bis zu einem gewissen Grad thermisch belastbar, wodurch derartige thermische Engpässe auftreten können. Dies betrifft insbesondere den Übergang, an dem das (z. B. See-) Kabel an Land überführt wird. Das Wasser des Gewässers wird effizient mittels des gegenständlichen Systems zur Temperaturregulierung an dem Übergang vom Gewässer zum Land eingesetzt. Ferner ist es derart möglich, beispielsweise Beton, mit dem ein derartiges Kabel zur Reduzierung der thermischen Belastung des Kabels im Übergang vom Land zum Gewässer ummantelbar ist komplett einzusparen.

In einer beispielhaften Ausgestaltung des Gegenstandes nach allen Aspekten umfasst das System ferner umfassend:
- Mittel zum Führen des Kabels, so dass das Kabel in den Mitteln zum Führen des Kabels geführt verlegt ist.

Die Mittel zum Führen des Kabels führen das Kabel in starrer, also vorgegebener Weise. Alternativ führen die Mittel zum Führen des Kabels dieses in variabler Weise, wobei in letzterem Fall die Mittel zum Führen des Kabels zumindest teilweise flexibel ausgebildet sind.

In einer beispielhaften Ausgestaltung des Gegenstandes nach allen Aspekten umfassen die Mittel zum Führen des Kabels ein Kabelschutzsystem, so dass das Kabel von einem landseitigen Austrittspunkt auf einen Boden des Gewässers geführt ist.

Das Kabelschutzsystem gewährleistet insbesondere, dass eine mechanische Belastung des Kabels im Bereich, z. B. eine Biegung des Kabels, nicht zu Defekten des Kabels führt. Ein derartiger Bereich, in dem das Kabel gebogen ist, ist beispielsweise von einem Austrittspunkt des Kabels in ein Gewässer hinein, wobei das Kabel im Anschluss auf einen Boden des Gewässers geführt ist.

Das Kabel ist beispielsweise sicher vom Austrittspunkt vom Land ins Gewässer (Meer)auf den Boden (auf den Meeresboden) zu führen, so dass es dort abgelegt werden kann. Um insbesondere die mechanische Belastung auf das Kabel zu kontrollieren, kann beispielsweise in diesem Bereich das Kabel zusätzlich mit Mitteln zum Führen des Kabels auf den Boden versehen sein. Bei den Mitteln zum Führen des Kabels beispielsweise handelt es sich beispielsweise um ein zumindest teilweise im Übergangsbereich von einem Austrittspunkt vom Land in Richtung Boden gebogenes Rohr. Alternativ oder zusätzlich kann eine Art Gerüst verwendet werden, auf dem das Kabel ablegbar und mittels in verschiedenen Höhen am Gerüst angeordneter Halter für das Kabel dieses kontrolliert auf den Boden führbar ist.

Das Kabelschutzsystem ermöglicht beispielsweise neben dem Führen des Kabels, z. B. in kontrollierter Art und Weise von einem Austrittspunkt des Kabels in das Gewässer (Meer) hinein auf den Boden des Gewässers (Meeresboden), weitere Eigenschaften, die insbesondere darauf abzielen, die Langlebigkeit des Kabels zu steigern. Ein derartiges Kabelschutzsystem weist eine oder mehrere der im Folgenden aufgeführten Eigenschaften auf, mit denen das Kabel zumindest in einem Abschnitt, an dem das Kabelschutzsystem angeordnet ist, versehbar ist:
- Erhöhung der Korrosionsbeständigkeit des Kabels;
- Erhöhung der Temperaturbeständigkeit des Kabels;
- Erhöhung der mechanischen Festigkeit des Kabels (z. B. schlagdämpfende Wirkung und/oder vor Abrieb durch äußere mechanische Einwirkung auf das Kabel schützend); und
- Ermöglichen einer Vibrationsdämpfung des Kabels, um nur einige nichtlimitierende Beispiele zu nennen.

In einer beispielhaften Ausgestaltung des Gegenstandes nach allen Aspekten umfassen die Mittel zum Kühlen des Kabels ein Rohr, so dass das Kabel innerhalb des Rohrs verlegt ist.

Die Exportkabel werden üblicherweise durch ein Rohr gezogen. Dieses Rohr wird über ein horizontales Bohrverfahren von der Landseite bis zur Seeseite in den Boden eingebracht.

Das Rohr ist beispielsweise ein sogenanntes HDD (Horizontal Directional Drilling) Rohr. Das Rohr wird beispielsweise mittels eines Horizontalspülbohrverfahrens (auch als HDD bezeichnet) verlegt, so dass anschließend das Kabel in das verlegte Rohr einziehbar ist. Dabei wird beispielsweise ein Rohr so durch die Erde vom Land bis ins Wasser gebohrt werden, dass das landseitige Ende des Rohres stets unter dem Wasserspiegel des Gewässers (z. B. Meeresspiegel) liegt. Dies ermöglicht einen weiteren technischen Effekt, wonach eine Gefahr des Versandens von einem derartigen Rohr auf dessen gewässerseitiger Öffnung reduziert wird, so dass Wasser zur Temperaturregulierung des Kabels durch die hüllenartige Ummantelung des Kabels durchtreten kann.

Beispielsweise strömt oder fließt bei Hochwasser oder bei Flut das Wasser durch das mittels des Horizontalspülbohrverfahrens verlegten Rohrs in Richtung der Mittel zum landseitigen Sammeln von Wasser (ein natürliches oder künstlich angelegtes Wassersammelbecken). Bei Niedrigwasser oder Ebbe fließt das Wasser ggf. zurück ins Gewässer (Meer). Über die Mittel zum Steuern der Menge von Wasser kann die Rückflussmenge beispielsweise geregelt oder gesteuert werden. Dies wirkt sich insbesondere kühlend auf das Kabel und somit dessen thermische Belastung aus.

In einer beispielhaften Ausgestaltung des Gegenstandes nach allen Aspekten ist das Rohr doppelwandig ausgebildet, so dass das Wasser in einem zwischen der Doppelwandung ausgebildeten Hohlraum strömt.

Wenn das Rohr, das das Kabel zumindest im Bereich des Übergangs von den Mitteln zum landseitigen Sammeln von Wasser bis ins Gewässer hinein hüllenartig umschließt, zumindest in diesem Bereich doppelwandig ausgebildet ist, tritt das Wasser nicht unmittelbar in Kontakt mit dem Wasser, da das Wasser innerhalb des in der Doppelwandung des Rohrs ausgebildeten Zwischenraums fließt bzw. strömt. Dies kann sich positiv auf die Haltbarkeit bzw. Langlebigkeit des Kabels auswirken, geht jedoch mitunter mit einer leicht reduzierten thermischen Wirkung z. B. der Kühlung des Kabels durch das Wasser einher. Dies liegt darin begründet, dass sich zwischen dem Kabel und dem Wasser vereinzelt Luftkammern bilden können, und Luft die Wärme des Kabels nur in geringem Maße auf das Wasser nach der Art eines Wärmetauschers transferieren kann.

In einer beispielhaften Ausgestaltung des Gegenstandes nach allen Aspekten liegt der landseitige Austritt des Kabels unterhalb des niedrigsten möglichen Wasserspiegels des Gewässers.

Dies ist insbesondere relevant, da das Gewässer das Meer ist, und der Wasserspiegel, d.h. Meeresspiegel bedingt durch Ebbe und Flut absinkt und sich wieder anhebt.

Dadurch ist auch der gewässerseitige Austritt des Kabels höher als der landseitige Austritt, so dass die Gefahr eines Versandens des Rohrs, durch welches das Kabel geführt ist, verringert ist bzw. ein Versanden vermieden wird.

Um das Kabel derart unter dem Wasserspiegel landseitig aus der Erde treten zu lassen, ist entweder eine gegebene natürliche Topologie der Umgebung zu nutzen oder die Mittel zum landseitigen Sammeln von Wasser sind als ein oder mehrere Wassersammel- bzw. -auffangbecken künstlich in den Boden einzubringen, so dass in diesem bzw. diesen das Wasser sammelbar ist.

In einer beispielhaften Ausgestaltung des Gegenstandes nach allen Aspekten, umfasst das System ferner:
- eine Übergabestation (z. B. umfassend einen Trafo), die landseitig angeordnet ist, wobei das Kabel von den Mitteln zum landseitigen Sammeln von Wasser zu der Übergabestation geführt ist.

Die Übergabestation ist beispielsweise eine Umspannstation, mittels der die von einer mit dem Kabel angeschlossenen Windenergieanlage bzw. eines mit dem Kabel angeschlossenen Windparks erzeugte elektrische Energie zum Transport mittels eines Stromverteilnetzes zum Verbraucher transportierbar ist. Die erzeugte elektrische Energie wird beispielsweise von Gleichstrom auf Wechsel- oder Drehstrom gewandelt. Ferner ist die erzeugte elektrische Energie auf eine von dem Verteilnetz verwendete Spannungsebene (z. B. 10/20kV, oder 400 V, um nur einige nichtlimitierende Beispiele zu nennen) transformierbar.

In einer beispielhaften Ausgestaltung des Gegenstandes nach allen Aspekten umfassen die Mittel zum Steuern einer Menge von Wasser ein Ventil. Alternativ kann zum Steuern der Wassermenge eine Pumpe eingesetzt werden. In letzterem Fall umfassen die Mittel zum Steuern einer Menge von Wasser entsprechend eine Pumpe, mittels der insbesondere Wasser von den Mitteln zum landseitigen Sammeln von Wasser zurück in das Gewässer pumpbar ist.

Optional umfasst das System auch ein derartiges Ventil und/oder eine derartige Pumpe auf der Gewässerseite (z. B. See-/Meeresseite) des Kabels.

Das Ventil und/oder die Pumpe sind also beispielsweise auf der Landseite angeordnet (z. B. installiert). Mittels des Ventils und/oder der Pumpe ist z. B. ein Steuern einer Rückflussmenge von Wasser möglich. Gleiches gilt für ein optionales Ventil und/oder eine Pumpe, die gewässerseitig am Ort des Eintritts des Kabels vom Land in das Gewässer hinein anordenbar (z. B. installierbar) ist. Für den Fall, dass sowohl landseitig als auch gewässerseitig ein Ventil oder eine Pumpe, oder eine Kombination aus Ventil und Pumpe, oder beidseitig sowohl Ventil als auch Pumpe angeordnet sind, kann ein äußerst genaues Steuern der Durchflussmenge an Wasser und somit eine Temperaturregulierung des Kabels im Übergang vom Gewässer zum Land des Kabels erfolgen.

In einer beispielhaften Ausgestaltung des Gegenstandes nach allen Aspekten sind die Mittel zum Steuern einer Menge von Wasser in einen Wartungsmodus versetzbar, so dass das Kabel aus den Mitteln zum Kühlen des Kabels entfernbar ist.

Die Mittel zum Steuern einer Menge von Wasser, z. B. umfassend ein Ventil und/oder eine Pumpe, müssen derart betreibbar sein, z. B. im Falle eines Ventils geöffnet werden können, um im Fehlerfall des Kabels (z. B. falls das Kabel defekt ist), diesen aus einem von den Mitteln zum Kühlen des Kabels umfasste hüllenartige Ummantelung (z. B. ein (HDD) Rohr) des Kabels dieses wieder entfernen (z. B. rausziehen) zu können. Anschließend kann ein fehlerfreies, repariertes oder neues Kabel in die Mittel zum Kühlen des Kabels z. B. umfassend ein Rohr wieder eingezogen werden, bzw. ein entsprechendes Kabel ist in die hüllenartige Ummantelung einziehbar.

Wie bereits vorstehend offenbart ist es gegenständlich ermöglicht, dass das Kabel nicht mit Beton zu dessen Kühlung ummantelt werden muss. Das Kabel ist im Falle eines Fehlers wesentlich einfacher zu reparieren und auch eine mitunter erforderliche Wartung des Kabels ist wesentlich vereinfacht, da auf den Beton gegenständlich verzichtet werden kann und die thermische Effizienz trotzdem gewährleistet ist.

In einer beispielhaften Ausgestaltung des Gegenstandes nach allen Aspekten umfasst das System ferner:
- weitere Mittel zum Kühlen eines weiteren Kabels, welche ein weiteres Kabel zumindest in einem Abschnitt von den Mitteln zum landseitigen Sammeln von Wasser bis in das Gewässer hüllenartig umschließen, wobei zwischen dem weiteren Kabel und den Mitteln zum Kühlen des weiteren Kabels ein Hohlraum ausgebildet ist, durch den das Wasser strömt.

In den Mitteln zum landseitigen Sammeln von Wasser können entsprechende mehrere Kabel enden, so dass mehrere Kabel gegenständlich insbesondere in deren jeweiligen Übergang vom Land ins Gewässer temperaturregulierbar sind. Die Mittel zum landseitigen Sammeln von Wasser umfassen im Falle von mehreren (d.h. mindestens zwei) in diese geführte Kabel ein größeres Fassungsvermögen, so dass die Menge Wasser zur Kühlung der Kabel hinreichend ist. Entsprechend kann das System insbesondere mehrere (d.h. mindestens zwei) Mittel zum Temperaturregulieren (z. B. Kühlen) von Kabeln umfassen.

Die weiteren Mittel zum Kühlen eines weiteren Kabels können in analoger Weise wie die Mittel zum Kühlen des Kabels ausgebildet sein und/oder gleiche Merkmale umfassen oder aufweisen.

In einer beispielhaften Ausgestaltung des Gegenstandes nach allen Aspekten transportieren das Kabel und/oder das weitere Kabel jeweils von einer Windenergieanlage oder einem Windpark umfassend mehrere (d.h. mindestens zwei) Windenergieanlagen erzeugte elektrische Energie.

In einer beispielhaften Ausgestaltung des Gegenstandes nach allen Aspekten umfassen die Mittel zum landseitigen Sammeln von Wasser einen natürlichen Wasserspeicher, oder einen künstlich gebauten Wasserspeicher.

Wie bereits vorstehend offenbart, sind die Mittel zum landseitigen Sammeln von Wasser beispielsweise ein Auffangbecken für Wasser. Dieses muss entsprechend der Anzahl der zu temperaturregulierenden (z. B. kühlenden) Kabel dimensioniert sein. Für den Fall, dass beispielsweise sechs Kabel gekühlt werden sollen, muss ein entsprechendes Auffangbecken also relativ groß sein, da die Kabel beispielsweise jeweils in einem Rohr von einer mit dem Kabel angebundenen Windenergieanlage bzw. Windpark zu Land in die Mittel zum landseitigen Sammeln von Wasser geführt werden. Z. B. müssen die Mittel zum landseitigen Sammeln von Wasser zumindest das Fassungsvermögen der Volumina der in diesen Mitteln endenden Mitteln zum Temperaturregulieren eines Kabels (z. B. dessen hüllenartigen Ummantelungen) aufweisen, um sicher alle darin befindlichen Kabel z. B. kühlen zu können.

Das Meer repräsentiert das Gewässer, und während der Flut fließt Wasser vom Meer durch die Mittel zum Kühlen des Kabels in die Mittel zum landseitigen Sammeln von Wasser und bei Ebbe das Wasser aus diesen zurück in das Meer.

Das Fließen bzw. Strömen von Wasser kann ferner bei Hochwasser vom Gewässer (Meer)durch die Mittel zum Kühlen des Kabels in die Mittel zum landseitigen Sammeln von Wasser und bei Niedrigwasser aus diesen zurück in das Gewässer fließen bzw. strömen. Mittels einer Pumpe und/oder eines Ventils kann die Menge des fließenden bzw. strömenden Wassers gesteuert und/oder geregelt werden, d.h. erhöht oder verringert werden.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein. Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

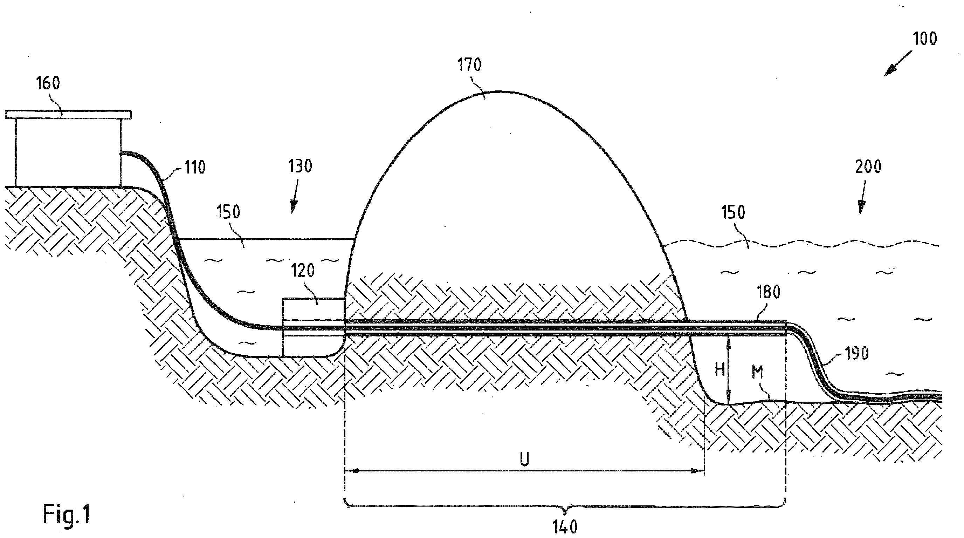

In der Zeichnung zeigt
- Fig. 1: eine schematische Darstellung eines gegenständlichen Systems.

### Detaillierte Beschreibung einiger beispielhafter Ausführungsformen

Fig.1 zeigt eine schematische Darstellung eines gegenständlichen Systems.

Das System 100 ist zur Temperaturregulierung eines zumindest teilweise im

Übergang U von Land zum Gewässer (das Meer) verlegten Kabels 110 ausgebildet und/oder eingerichtet. Das System 100 umfasst Mittel 130 zum landseitigen Sammeln von Wasser, so dass Wasser 150 in diesen Mitteln 130 gesammelt und aus diesen Mitteln 130 ausgebbar ist. Das System 100 umfasst ferner Mittel 120 zum Steuern einer Menge von Wasser, so dass eine Menge von Wasser 150, die aus den Mitteln 130 zum landseitigen Sammeln von Wasser ausströmt oder in diese hinein fließt, steuerbar ist. Ferner umfasst das System 100 Mittel 140 zum Kühlen eines Kabels, insbesondere zum Kühlen des Kabels 110, welche das Kabel 110 zumindest in einem Abschnitt von den Mitteln 130 zum landseitigen Sammeln von Wasser bis in das Meer hinein hüllenartig umschließen. Zwischen dem Kabel 110 und den Mitteln 140 zum Kühlen des Kabels ist ein Hohlraum ausgebildet, durch den das Wasser 150 strömt. Das System umfasst ferner eine Übergabestation 160, mit der ein Ende des Kabels 110 verbunden ist. Nicht dargestellt ist in Fig. 1, dass das andere Ende des Kabels 110 mit einer Offshore Windenergieanlage, oder einem Offshore Windpark verbunden ist, so dass mittels des Kabels 110 von der Offshore Windenergieanlage oder dem Offshore Windpark erzeugte elektrische Energie zu der Übergabestation (z. B. umfassend einen Trafo) transportierbar ist.

Vorliegend handelt es sich bei den Mitteln 130 zum landseitigen Sammeln von Wasser um ein natürliches Auffangbecken für Wasser 150, das geeignet ist zumindest diejenige Menge an Wasser 150 zu sammeln, die benötigt ist, um das Kabel 110 im Übergang U von Land, hier die Düne 170 zum Meer kühlen zu können.

Die Mittel 140 zum Kühlen eines Kabels, vorliegend Kabel 110, umfassen ein Rohr, das im HDD-Verfahren, also Horizontalspülbohrverfahren vom Land aus ins Meer verlegt ist. Der meerseitige Austritt des Kabels 110 ist nicht unmittelbar am Meeresboden MB, so dass noch ein Höhenunterschied H überbrückt werden muss, um das Kabel 110 kontrolliert auf dem Meeresboden MB, von wo aus es sich bis zu einer Offshore Windenergieanlage oder einem Offshore Windpark erstreckt, abzulegen.

Es ist zu erkennen, dass der meerseitige Austritt des Kabels 110 höher liegt als der Austritt des Kabels 110 innerhalb des natürlichen Auffangbeckens 130. Würde die Bohrung des Rohrs 180 von der Meeresseite zur Landseite ansteigen, könnte mitunter das Rohr irgendwann frei von Wasser sein, so dass eine ausreichendes Kühlen des Kabels 110 im Übergang U nicht mehr gewährleistet werden kann.

An dem Austrittpunkt des Rohrs 180 in die Mittel 130 zum landseitigen Sammeln von Wasser ist ferner ein Ventil als Mittel 120 zum Steuern einer Menge von Wasser 150 angeordnet, um die Menge Wasser 150 die zum Kühlen des Kabels 110 durch das Rohr 180 fließt, steuern und/oder regeln zu können. Der meerseitige Austritt des Kabels 110 liegt ferner unterhalb des niedrigsten möglichen Wasserspiegels 200 (hier: der Meeresspiegel), so dass gewährleistet werden kann, dass stets Meerwasser zumindest vom Meer aus in das natürliche Auffangbecken 130 fließen oder strömen kann.

Anstelle von Beton (bzw. eine Art von Beton), mit dem das Rohr 180 ebenfalls füllbar wäre, ist es gegenständlich vorgesehen, das Wasser 150 durch das Rohr 180 fließen zu lassen. Zwar hat Beton bzw. verschiedene Betonarten haben eine bessere thermische Leitfähigkeit als Luft, jedoch ist es insbesondere im Wartungs- oder Reparaturfall nachteilig und die thermische Leitfähigkeit von Wasser ist ebenfalls besser als die von Luft. Wenn das Rohr 180 mit Beton verfüllt ist, kann das Kabel 110 nicht ohne weiteres aus dem Rohr 180 wieder entfernt werden. Oftmals muss ein neues Rohr z. B. im HDD-Verfahren verlegt und ein neues Kabel 110 in das neu verlegte Rohr eingezogen werden.

Wird in dem Rohr 180 Luft gelassen, wäre die thermische Belastung des Kabels 110 im Übergang U deutlich erhöht, da Luft mehr als Isolator wirkt als z. B. Beton. Beispielhafte Ausgestaltungen nach allen Aspekten ermöglichen es, dass der Austrittspunkt der Bohrung bzgl. in dessen Folge des Rohrs 180 auf der Landseite, also innerhalb der Mittel zum landseitigen Sammeln von Wasser 130 unterhalb des Meeresspiegels liegt. Ferner kann das Kabel 110 beispielsweise kontrolliert unter der Meeresoberfläche bzw. zumindest unter dem maximal möglichen Meeresspiegel austreten.

Anstelle des natürlichen Auffangbeckens 130 kann auch ein Becken aus Beton extra gebaut werden, so dass das Wasser 150 durch das Rohr 180 in dieses hin- und wieder heraus strömen kann. Das Wirkprinzip ist hierbei identisch.

Das Wasser 150 kann durch das Rohr 180 zum Kühlen des Kabels 110 beispielsweise entweder nur durch die Gezeiten, also Ebbe und Flut durch das Rohr 180 fließen oder strömen. Alternativ oder zusätzlich kann das Wasser 150 auf der Landseite, z. B. innerhalb der Mittel zum landseitigen Sammeln von Wasser 130 mittels eines Ventils und/oder einer Pumpe reguliert durch das Rohr 180 fließen oder strömen. Bei letzterer Möglichkeit kann das Wasser 150 z. B. bei bestimmten Situationen gezielt abfließen, z. B. wenn eine erhöhte Kühlung des Kabels durch eine gesteigerte Menge zu transportierenden elektrischer Energie mittels des Kabels 110 notwendig ist, um nur ein nicht-limitierendes Beispiel zu nennen.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

### Bezugszeichenliste

- 100: System
- 110: Kabel
- 120: Mittel zum Steuern einer Menge von Wasser
- 130: Mittel zum landseitigen Sammeln von Wasser
- 140: Mittel zum Kühlen eines Kabels
- 150: Wasser
- 160: Übergabestation
- 170: Land (z. B. Strand, Düne, oder dergleichen)
- 180: HDD Rohr
- 190: Kabelschutzsystem
- 200: maximaler Wasserspiegel
- U: Übergang Land / Gewässer
- H: Höhenunterschied zum Führen des Kabels auf den Boden des Gewässers
- M: Boden des Gewässers

## Patentansprüche

1. System (100) zur Temperaturregulierung eines zumindest teilweise im Übergang (U) von Land zu einem Gewässer verlegten Kabels (110), umfassend:
- Mittel zum landseitigen Sammeln von Wasser (130), so dass Wasser (150) in diesen Mitteln (130) sammelbar und aus diesen Mitteln (130) ausgebbar ist;
- Mittel zum Steuern einer Menge von Wasser (120), so dass eine Menge von Wasser (150), die aus den Mitteln zum landseitigen Sammeln von Wasser (130) ausströmt oder in diese vom Gewässer hineinfließt, steuerbar ist; und
- Mittel zum Kühlen eines Kabels (140), welche das Kabel (110) zumindest in einem Abschnitt von den Mitteln zum landseitigen Sammeln von Wasser (130) bis in ein Gewässer hinein hüllenartig umschließen, wobei zwischen dem Kabel (110) und den Mitteln zum Kühlen des Kabels (140) ein Hohlraum ausgebildet ist, durch den das Wasser (150) zum Kühlen des Kabels (140) strömt, wobei es sich bei den Mitteln zum landseitigen Sammeln von Wasser (130) um mindestens ein Wassersammel- oder Auffangbecken handelt, das sich auf der Landseite befindet, **dadurch gekennzeichnet,**
- **dass** das Meer das Gewässer repräsentiert, und
die Mittel zum landseitigen Sammeln von Wasser und die Mittel zum Kühlen des Kabels so am Meer angeordnet sind, dass während der Flut Wasser vom Meer durch die Mittel zum Kühlen des Kabels (140) in die Mittel zum landseitigen Sammeln von Wasser (130) und bei Ebbe das Wasser (150) aus diesen zurück in das Meer fließt.

2. System (100) nach Anspruch 1, ferner umfassend:
- Mittel zum Führen des Kabels, so dass das Kabel (110) in den Mittel zum Führen des Kabels (110) geführt verlegt ist.

3. System (100) nach Anspruch 2, wobei die Mittel zum Führen des Kabels ein Kabelschutzsystem (190) umfassen, so dass das Kabel (110) von einem landseitigen Austrittspunkt auf einen Boden (M) des Gewässers geführt ist.

4. System (100) nach einem der vorhergehenden Ansprüche, wobei die Mittel zum Führen des Kabels ein Rohr (180) umfassen, so dass das Kabel (110) innerhalb des Rohrs (180) verlegt ist.

5. System (100) nach Anspruch 4, wobei das Rohr (180) doppelwandig ausgebildet ist, so dass das Wasser (150) in einem zwischen der Doppelwandung ausgebildeten Hohlraum strömt.

6. System (100) nach einem der vorhergehenden Ansprüche, wobei der landseitige Austritt des Kabels unterhalb des niedrigsten möglichen Wasserspiegels (200) des Gewässers liegt.

7. System (100) nach einem der vorhergehenden Ansprüche, ferner umfassend:
- eine Übergabestation (160), die landseitig angeordnet ist, wobei das Kabel (110) von den Mitteln zum landseitigen Sammeln von Wasser (130) zu der Übergabestation (160) geführt ist.

8. System (100) nach einem der vorhergehenden Ansprüche, wobei die Mittel zum Steuern einer Menge von Wasser (120) ein Ventil umfassen.

9. System (100) nach einem der vorhergehenden Ansprüche, wobei die Mittel zum Steuern einer Menge von Wasser (120) in einen Wartungsmodus versetzbar sind, so dass das Kabel (110) aus den Mitteln zum Führen des Kabels entfernbar ist.

10. System (100) nach einem der vorhergehenden Ansprüche, ferner umfassend:
- weitere Mittel zum Kühlen eines weiteren Kabels, welche ein weiteres Kabel zumindest in einem Abschnitt von den Mitteln zum landseitigen Sammeln von Wasser (130) bis in das Gewässer hüllenartig umschließen, wobei zwischen dem weiteren Kabel und den Mitteln zum Kühlen des weiteren Kabels ein Hohlraum ausgebildet ist, durch den das Wasser (150) strömt.

11. System (100) nach einem der vorhergehenden Ansprüche, wobei das Kabel (110) und/oder das weitere Kabel jeweils von einer Windenergieanlage oder einem Windpark umfassend mehrere Windenergieanlagen erzeugte elektrische Energie transportieren.

12. System (100) nach einem der vorhergehenden Ansprüche, wobei die Mittel zum landseitigen Sammeln von Wasser (130) einen natürlichen Wasserspeicher umfassen, oder einen künstlich gebauten Wasserspeicher umfassen.

13. Verwendung eines Systems (100) nach einem der Ansprüche 1 bis 12 zum Anschluss zumindest einer Offshore-Windenergieanlage.

## Claims

1. A system (100) for regulating the temperature of a cable (110) laid at least partially in the transition (U) from land to a body of water, comprising:
- means for collecting water on the land side (130), so that water (150) can be collected in these means (130) and discharged from these means (130);
- means for controlling a quantity of water (120), so that a quantity of water (150) flowing out of the means for collecting water on the land side (130) or flowing into these means from the body of water is controllable; and
- means for cooling a cable (140), which enclose the cable (110) in an envelope-like manner at least in a section from the means for collecting water on the land side (130) into a body of water, wherein a cavity is formed between the cable (110) and the means for cooling the cable (140), through which cavity the water (150) flows for cooling the cable (140),
- wherein the means for collecting water on the land side (130) is at least one water collection basin or catch basin located on the land side,
**characterised in that**
- the sea represents the body of water, and the means for collecting water on the land side and the means for cooling the cable are arranged on the sea in such a way that during high tide water flows from the sea through the means for cooling the cable (140) into the means for collecting water on the land side (130) and at low tide the water (150) flows back from these into the sea.

2. System (100) according to claim 1, further comprising:
- means for guiding the cable, so that the cable (110) is laid in a guided way in the means for guiding the cable (110).

3. System (100) according to claim 2, wherein the means for guiding the cable comprise a cable protection system (190), so that the cable (110) is guided from a land-side exit point onto a bottom (M) of the body of water.

4. System (100) according to any one of the preceding claims, wherein the means for guiding the cable comprise a tube (180), so that the cable (110) is laid within the tube (180).

5. System (100) according to claim 4, wherein the tube (180) is double-walled so that the water (150) flows in a cavity formed between the double walls.

6. System (100) according to any one of the preceding claims, wherein the land-side exit of the cable lies below the lowest possible water level (200) of the body of water.

7. System (100) according to any one of the preceding claims, further comprising:
- a transfer station (160), which is arranged on the land side, wherein the cable (110) is guided from the means for collecting water on the land side (130) to the transfer station (160).

8. System (100) according to any one of the preceding claims, wherein the means for controlling a quantity of water (120) comprise a valve.

9. System (100) according to any one of the preceding claims, wherein the means for controlling a quantity of water (120) can be put into a maintenance mode, so that the cable (110) can be removed from the means for guiding the cable.

10. System (100) according to any one of the preceding claims, further comprising:
- further means for cooling a further cable, which enclose a further cable in an envelope-like manner at least in a section from the means for collecting water on the land side (130) into the body of water, wherein a cavity is formed between the further cable and the means for cooling the further cable, through which cavity the water (150) flows.

11. System (100) according to any one of the preceding claims, wherein the cable (110) and/or the further cable each transport electrical energy generated by a wind turbine or a wind farm comprising a plurality of wind turbines.

12. System (100) according to any one of the preceding claims, wherein the means for collecting water on the land side (130) comprise a natural water reservoir, or comprise an artificially constructed water reservoir.

13. Use of a system (100) according to any one of claims 1 to 12 for connecting at least one offshore wind turbine.

## Revendications

1. Système (100) pour la régulation de la température d'un câble (110) posé au moins partiellement dans la transition (U) entre la terre et une étendue d'eau, comprenant :
- des moyens pour collecter de l'eau côté terre (130), de sorte que l'eau (150) peut être collectée dans ces moyens (130) et peut être émise de ces moyens (130) ;
- des moyens pour contrôler une quantité d'eau (120), de sorte qu'une quantité d'eau (150) sortant des moyens pour collecter de l'eau côté terre (130) ou s'écoulant dans ceux-ci à partir de l'étendue d'eau puisse être contrôlée ; et
- des moyens pour refroidir un câble (140), qui entourent le câble (110) à la manière d'une gaine au moins dans une section allant des moyens pour collecter de l'eau côté terre (130) jusqu'à l'intérieur d'une étendue d'eau, un espace creux étant formé entre le câble (110) et les moyens pour refroidir le câble (140), à travers lequel s'écoule l'eau (150) pour refroidir le câble (140),
- dans lequel les moyens pour collecter de l'eau côté terre (130) sont au moins un bassin de collecte ou de réception d'eau situé côté terre,
**caractérisé en ce que**
- la mer représente l'étendue d'eau, et les moyens pour collecter de l'eau côté terre et les moyens pour refroidir le câble sont disposés sur la mer de sorte que, pendant la marée haute, l'eau s'écoule de la mer à travers les moyens pour refroidir le câble (140) dans les moyens pour collecter de l'eau côté terre (130) et, à marée basse, l'eau (150) s'écoule de ceux-ci en retour dans la mer.

2. Système (100) selon la revendication 1, comprenant en outre :
- des moyens pour guider le câble, de sorte que le câble (110) est posé de manière guidée dans les moyens pour guider le câble (110).

3. Système (100) selon la revendication 2, dans lequel les moyens pour guider le câble comprennent un système de protection de câble (190), de sorte que le câble (110) est guidé depuis un point de sortie côté terre sur un fond (M) de l'étendue d'eau.

4. Système (100) selon l'une quelconque des revendications précédentes, dans lequel les moyens pour guider le câble comprennent un tube (180), de sorte que le câble (110) est posé à l'intérieur du tube (180).

5. Système (100) selon la revendication 4, dans lequel le tube (180) est à double paroi, de sorte que l'eau (150) s'écoule dans un espace creux formé entre la double paroi.

6. Système (100) selon l'une quelconque des revendications précédentes, dans lequel la sortie côté terre du câble est située en dessous du niveau d'eau (200) le plus bas possible de l'étendue d'eau.

7. Système (100) selon l'une quelconque des revendications précédentes, comprenant en outre :
- une station de transfert (160) située côté terre, le câble (110) étant guidé depuis les moyens pour collecter de l'eau côté terre (130) jusqu'à la station de transfert (160).

8. Système (100) selon l'une quelconque des revendications précédentes, dans lequel les moyens pour contrôler une quantité d'eau (120) comprennent une vanne.

9. Système (100) selon l'une quelconque des revendications précédentes, dans lequel les moyens pour contrôler une quantité d'eau (120) peuvent être placés dans un mode de maintenance, de sorte que le câble (110) peut être retiré des moyens pour guider le câble.

10. Système (100) selon l'une quelconque des revendications précédentes, comprenant en outre :
- d'autres moyens pour refroidir un autre câble, qui entourent un autre câble à la manière d'une gaine au moins dans une section allant des moyens pour collecter de l'eau côté terre (130) jusque dans l'étendue d'eau, un espace creux étant formé entre l'autre câble et les moyens pour refroidir l'autre câble, à travers lequel s'écoule l'eau (150).

11. Système (100) selon l'une quelconque des revendications précédentes, dans lequel le câble (110) et/ou l'autre câble transporte(nt) respectivement de l'énergie électrique produite par une éolienne ou un parc éolien comprenant plusieurs éoliennes.

12. Système (100) selon l'une quelconque des revendications précédentes, dans lequel les moyens pour collecter de l'eau côté terre (130) comprennent un réservoir d'eau naturel, ou comprennent un réservoir d'eau construit artificiellement.

13. Utilisation d'un système (100) selon l'une quelconque des revendications 1 à 12 pour le raccordement d'au moins une éolienne offshore.
